# EUROPÄISCHE PATENTSCHRIFT

(11) **EP 2 536 598 B1**
(45) Veröffentlichungstag und Bekanntmachung des Hinweises auf die Patenterteilung: **19.03.2014**
(21) Anmeldenummer: 11701979.4
(22) Anmeldetag: 26.01.2011
(51) Int. Cl.: B60R 25/02, B62D 5/00, H01F 7/16, H01F 7/18

(54) **LENKVORRICHTUNG FÜR EIN KRAFTFAHRZEUG**
VEHICLE STEERING DEVICE
SYSTEME DE DIRECTION POUR VEHICULE

(30) Priorität: 15.02.2010 DE 102010001914
(43) Veröffentlichungstag der Anmeldung: 26.12.2012
(73) Patentinhaber: Robert Bosch GmbH, 70442 Stuttgart (DE)
(72) Erfinder: HENKE, Torsten, 71332 Waiblingen (DE); XU, Min, 70435 Stuttgart (DE)
(86) Internationale Anmeldenummer: PCT/EP2011/051021
(87) Internationale Veröffentlichungsnummer: WO 2011/098353

(56) Entgegenhaltungen:
- EP-A2- 1 249 375
- WO-A1-02/40336
- DE-A1- 4 446 613
- DE-A1- 19 704 062
- DE-A1-102004 037 617
- DE-A1-102005 018 012
- DE-A1-102005 058 176
- DE-A1-102008 018 560

## Beschreibung

### Stand der Technik

Die Erfindung betrifft eine Lenkvorrichtung für ein Kraftfahrzeug. Die Lenkvorrichtung weist einen Antrieb, insbesondere einen elektromotorischen Antrieb auf. Der Antrieb ist ausgebildet, insbesondere mittels eines Elektromotors, ein Drehmoment zum Unterstützen eines Lenkens eines Kraftfahrzeuges zu erzeugen.

In jüngster Zeit werden praktisch in allen Fahrzeugen Lenkvorrichtungen mit einer Unterstützung, beispielsweise elektrisch getriebene Servolenkungen, verwendet. Derartige Servolenkungen weisen beispielsweise einen Sensor auf, der einen Lenkvorgang eines Fahrers erfasst und über eine Steuereinheit einen an der Lenksäule oder einem Lenkgestänge angeordneten Elektromotor steuert. Dieser Elektromotor erzeugt dann ein entsprechendes Drehmoment, um den Lenkvorgang zu unterstützen. Während eines Fahrens, insbesondere in Gefahrensituationen, soll ein Blockieren der Lenkvorrichtung ausgeschlossen sein. Anders als beim Fahren, kann beim Parken des Fahrzeugs ein Blockieren der Lenkvorrichtung vorteilhaft als Wegfahrsperre dienen. Hierzu werden bisher Lenkradverriegelungen eingesetzt, die insbesondere an der Lenksäule montiert sind. Durch ein Zusammenwirken von beispielsweise Sperrelementen der Lenkverriegelung mit an der Lenksäule zusätzlich vorgesehenen Gegenelementen kann ein Blockieren der Lenkvorrichtung erreicht werden. Hierzu werden die Sperrelemente beispielsweise durch Ansteuerung von Aktuatoren zu einem definierten Zeitpunkt in eine sperrende Stellung oder in eine entsperrende Stellung gebracht.

Aus der DE 10 2005 058 176 A1 ist eine verriegebar ausgebildete Lenkvorrichtung nach dem oberbegriff des Anspruchs 1 bekannt, bei der ein elektromagnetisch betätigbar ausgebildeter Anker die Lenkvorrichtung sperren oder freigeben kann.

Aus der DE 10 2005 018 012 A1 ist ein elektromagnetischer Aktuator umfassend zwei Spulen bekannt, bei dem eine Position eines mittels eines magnetischen Feldes der Spulen bewegbaren Ankers in den Spulen mittels einer sprunghaft ansteigenden Spannung beaufschlagt werden können, und ein Verlauf einer über den Spulen abfallenden Spannung erfasst werden kann, wobei eine Position des Ankers in Abhängigkeit eines Maximlwertes eines Differenzsignals der über den Spulen abfallenden Spannungen erfasst werden kann.

Bei dem oben genannten Stand der Technik besteht die Möglichkeit, insbesondere in Gefahrensituationen, dass die Lenkvorrichtung, durch die dafür vorgesehenen Sperrglieder, blockiert wird.

### Offenbarung der Erfindung

Der oben genannte Nachteil wird durch die Merkmale des Vorrichtungsanspruchs 1 bzw. des Verfahrensanspruchs 8 beseitigt.

Die Lenkvorrichtung weist ein elektromagnetisches Lenkschloss mit einem entlang einer Translationsachse oder um eine Schwenkachse hin- und herbeweglichen Sperrelement auf. Das Sperrelement ist angeordnet und ausgebildet, zum Sperren des Lenkens in den Antrieb formschlüssig und/oder kraftschlüssig einzugreifen. Das Lenkschloss weist wenigstens zwei oder genau zwei mit dem Sperrelement wirkverbundene elektromagnetische Spulen auf, wobei die elektromagnetischen Spulen jeweils angeordnet und ausgebildet sind, im bestromten Zustand das Sperrelement hin- oder herzubewegen. Die Lenkvorrichtung weist bevorzugt eine Positionserfassungsvorrichtung auf, welche ausgebildet ist, wenigstens eine Position des Sperrelements innerhalb des Bewegungsintervalls zu erfassen, wobei das Bewegungsintervall einen gesperrten und einen freigegebenen Zustand der Lenkvorrichtung umfasst.

Durch das Sperrelement kann vorteilhaft eine Wegfahrsperre für das Kraftfahrzeug gebildet sein. Die Positionserfassungsvorrichtung bewirkt vorteilhaft, dass wenn das Sperrelement während des Fahrens des Kraftfahrzeuges mittels Erschütterungen bewegt wird und so von dem freigegebenen Zustand in den gesperrten Zustand gerüttelt werden könnte, ein Verändern der Position des Sperrelements so rechtzeitig erfasst und verhindert werden kann. Weiter vorteilhaft kann ein gesperrter Zustand der Lenkvorrichtung zeitdiskret oder zeitkontinuierlich überwacht werden.

Das Sperrelement weist einen insbesondere ferromagnetisch ausgebildeten Anker auf, wobei der Anker im Wirkungsbereich der Spulen hin- und her beweglich angeordnet und mit dem Sperrelement verbunden ist.

Die Positionserfassungsvorrichtung ist mit wenigstens einer der Spulen verbunden und ausgebildet, eine Induktivität der Spule zu erfassen und in Abhängigkeit der Induktivität der Spule eine Position des Ankers zu erfassen. Die Positionserfassung des Ankers und somit des Sperrelements in Abhängigkeit einer Induktivität der Spule hat den Vorteil, dass keine weiteren Erfassungsmittel, beispielsweise eine Lichtschranke zum Erfassen einer Bewegung des Sperrelements beziehungsweise des Ankers Bestandteil der Lenkvorrichtung sein müssen. Eine Positionserfassung des Sperrelements kann so besonders aufwandsgünstig bereitgestellt werden.

Die Positionserfassungsvorrichtung ist ausgebildet, wenigstens eine der Spulen oder beide Spulen mit einem Testsignal zu beaufschlagen und in Abhängigkeit eines Antwortsignals der Spule die Induktivität der Spule zu erfassen. Das Testsignal ist beispielsweise ein Rechtecksignal, insbesondere ein gepulstes Testsignal, welches ausgebildet ist, die Induktivität der Spule zu erfassen, ohne dabei den Anker zu bewegen. Das Testsignal kann auch ein pulweitenmoduliertes Signal sein.

Das Testsignal umfasst Spannungspulse und Pulspausen, und das Antwortsignal ist eine induzierte Spannung. Die Spannungspulse weisen beispielsweise eine Rechteckform auf.

Das Testsignal weist beispielsweise eine Periodendauer von wenigen Millisekunden auf, beispielsweise 10 Millisekunden.

Die Lenkvorrichtung weist bevorzugt eine Leistungsendstufe auf. Die Spulen der Lenkvorrichtung sind weiter bevorzugt mit der Leistungsendstufe verbunden, wobei die Leistungsendstufe eine H-Brücke umfasst. Die Leistungsendstufe ist ausgebildet, die Spulen zum Bewegen des Sperrelements mit zwei zueinander verschiedenen Stromrichtungen zu bestromen.

Die H-Brücke der Leistungsendstufe umfasst bevorzugt vier Halbleiterschalter. Die Halbleiterschalter sind beispielsweise durch Thyristoren gebildet oder durch Feldeffekttransistoren, insbesondere MIS-Feldeffekttransistoren MIS = Metal-Insulator-Semiconductor). Weitere Ausführungsbeispiele für Transistoren sind ein MOS-Feldeffekttranssitror (MOS = Metal-Oxide-Semiconductor), ein IG-Feldeffekttransistor (IG = Insulated-Gate), oder ein IGBT (IGBT = Insulated-Gate-Bipolar-Transistor).

Die Lenkvorrichtung weist bevorzugt einen Ausgang für ein Warnsignal auf und ist ausgebildet, in Abhängigkeit einer erfassten Positionsänderung des Sperrelements das Warnsignal zu erzeugen und dieses ausgangshaltig auszugeben. Durch das Warnsignal kann vorteilhaft eine Steuervorrichtung des Kraftfahrzeugs entsprechende Gegenmaßnahmen bewirken, so kann beispielsweise mittels eines das Lenkschloss steuernden Stromes das Sperrelement in seine während eines Fahrbetriebs vorgesehene Ausgangsposition, insbesondere in den freigegebenen Zustand zurückgezogen werden.

Weiter bevorzugt ist der Ausgang eine Schnittstelle eines Feldbusses, insbesondere eines CAN-Busses (CAN = Controller-Area-Network). Weitere Ausführungsformen für einen Datenbus sind ein LIN-Bus (LIN = Local-Interconnect-Network) oder ein Flex-Ray-Bus.

In einer bevorzugten Ausführungsform der Lenkvorrichtung ist die Lenkvorrichtung ausgebildet, in Abhängigkeit einer erfassten Positionsänderung des Sperrelements, die Leistungsendstufe zum Stellen einer vorbestimmten Position des Sperrelements anzusteuern. Die vorbestimmte Position des Sperrelements ist beispielsweise die freigegebene Position, bei der eine Lenkung des Kraftfahrzeugs frei beweglich ist.

In einer vorteilhaften Ausführungsform weist die Lenkvorrichtung bevorzugt einen Beschleunigungssensor auf, wobei der Beschleunigungssensor ausgebildet ist, eine Erschütterung der Lenkvorrichtung zu erfassen und ein die Erschütterung repräsentierendes Beschleunigungssignal zu erzeugen. Die Lenkvorrichtung ist in dieser Ausführungsform ausgebildet, die Positionserfassung des Sperrelements in Abhängigkeit des Beschleunigungssignals durchzuführen Der Beschleunigungssensor ist beispielsweise ein mit einem Airbag verbundener Beschleunigungssensor. Weiter bevorzugt kann in Abhängigkeit des Beschleunigungssignals das zuvor beschriebene Warnsignal erzeugt werden und weiter bevorzugt ausgangsseitig bereitgestellt werden.

Die Erfindung betrifft auch ein Verfahren zum Betreiben einer elektrischmagnetisch betriebenen Lenksperre einer elektromotorisch unterstützten Fahrzeuglenkung.

Bei dem Verfahren wird zum Sperren oder Freigeben der Lenkung ein Sperrelement mittels zwei elektromagnetischen Spulen hin- oder beziehungsweise herbewegt, und beim Sperren eine Welle eines Antriebs der Lenkunterstützung, beispielsweise eine Motorwelle eines Elektromotors des Antriebs, mittels des Sperrelements formschlüssig gegen ein Drehbewegen gesperrt, und eine Position des Sperrelements in Abhängigkeit einer Induktivität wenigstens einer Spule erfasst.

Bei dem Verfahren wird mittels eines Spannungspulses ein Strom in der Spule erzeugt und die Induktivität der Spule in Abhängigkeit einer über der Spule abfallenden Spannung erfasst.

Die Erfindung wird nun im Folgenden anhand von Figuren und weiteren Ausführungsbeispielen beschrieben. Weiter vorteilhafte Ausführungsformen ergeben sich aus den abhängigen Ansprüchen sowie aus den in der Figurenbeschreibung aufgezeigten Merkmalen.
Figur 1 zeigt schematisch im Ausführungsbeispiel für einen elektromotorischen Antrieb eine Lenkvorrichtung für ein Kraftfahrzeug mit einem elektromagnetischen Lenkschloss;
Figur 2 zeigt ein Ausführungsbeispiel für eine Schaltungsanordnung für ein elektromagnetisches Lenkschloss wie in Figur 1 gezeigt;
Figur 3 zeigt schematisch ein Ausführungsbeispiel für Signalverläufe zu der zu der in Figur 2 gezeigten Schaltungsanordnung;
Figur 4 zeigt ein Ausführungsbeispiel für Signalverläufe der in Figur 2 gezeigten Schaltungsanordnung, wobei das Sperrelement sich in einer die Lenkung sperrenden Position befindet und die Induktivität der erfassten Spule im Vergleich zu Figur 3 erhöht ist.
Figur 5 zeigt ein Ausführungsbeispiel für ein Sperrelement, welches im eine Schwenkachse hin- und herbewegt werden kann.

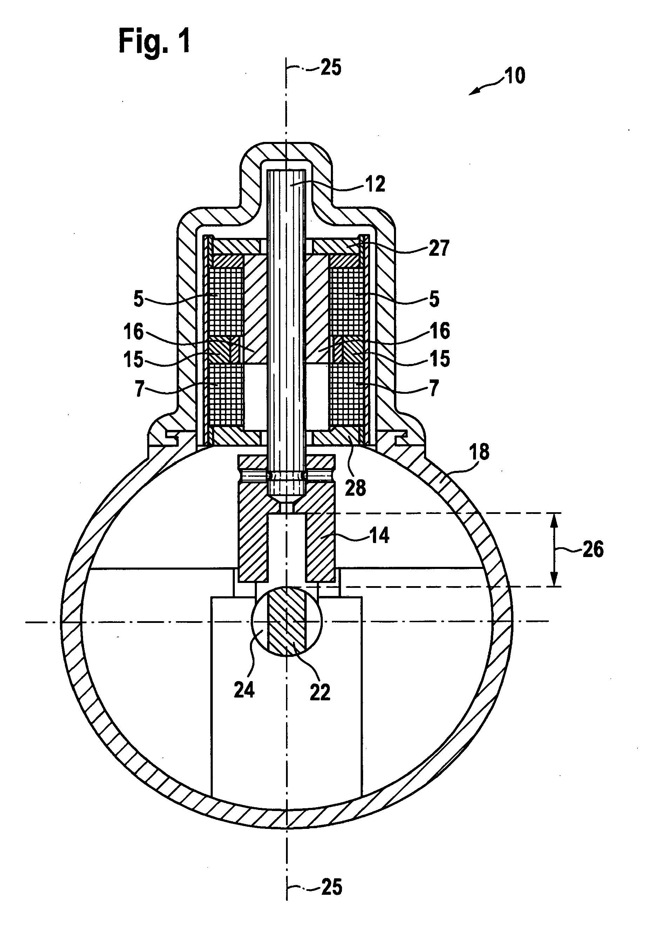

Figur 1 zeigt - schematisch - ein Ausführungsbeispiel für einen elektromotorischen Antrieb 10 eine Lenkvorrichtung für ein Kraftfahrzeug in einer Schnittdarstellung. Der Antrieb 10 umfasst ein Gehäuse 18, welches einen Elektromotor mit einer Motorwelle 22 aufnimmt. Das Gehäuse 18 nimmt auch zwei Spulen 5 und 7 auf. Die Spulen 5 und 7 umschließen gemeinsam ein Lumen, welches sich entlang einer Translationsachse 25 erstreckt.

Der Antrieb 10 weist auch ein sich längserstreckendes Sperrelement 12 auf, welches entlang der Translationsachse 25 hin- und herbeweglich gelagert ist. Das Sperrelement 12 weist an einem zum Eingriff mit der Motorwelle 22 vorgesehenen Ende eine Sperrgabel 14 auf, welche ausgebildet ist, in eine Aussparung 24 der Motorwelle 22 einzugreifen und die Motorwelle 22 so gegen ein Drehbewegen formschlüssig zu sichern.

Das Sperrelement 12 ist mit einem Anker 16 verbunden, welcher das Sperrelement 12 auf einem Längsabschnitt entlang der Translationsachse 15 umschließt und in dem Lumen zusammen mit dem Sperrelement 12 hin- und herbeweglich entlang der Translationsachse 25 beweglich angeordnet ist. Das Sperrelement 12 und der Anker 16 können sich zusammen entlang der Translationsachse 25 innerhalb eines Bewegungsintervalls 26 bewegen.

Der Antrieb 10 weist dazu zwei Anschlagbuchsen 27 und 28 auf, welche jeweils einen Durchbruch zum Führen des Sperrelements 12 aufweisen. Die Anschlagbuchsen 27 und 28 sind dabei derart angeordnet, dass der mit dem Sperrelement 12 verbundene Anker 16 beim Hin- und Herbewegen entlang der Translationsachse 25 mittels der Anschlagbuchsen 27 und 28 gegen ein Weiterbewegen entlang der Translationsachse 25 formschlüssig gesichert ist, so dass die Hin-und Herbewegung entlang der Translationsachse 25 das zuvor beschriebene Bewegungsintervall 26 nicht überschreiten kann.

Zwischen den Spulen 5 und 7 ist entlang der Translationsachse 25 ein ringförmig ausgebildeter Permanentmagnet 15 angeordnet, welcher das Lumen auf einem Längsabschnitt entlang der Translationsachse 25 umschließt, sodass der Anker 16 zusammen mit dem von diesem umschlossenen Längsabschnitt des Sperrelements 12 sich beim Hin- und Herbewegen entlang der Translationsachse 25 durch den Permanentmagnet 15 hindurchbewegen kann. Mittels des Permanentmagnets 15 ist für die Hin- und Herbewegung des Sperrelements 10 entlang der Translationsachse 25 ein bistabiler Zustand gebildet. Mittels des Permanentmagnets 15 wird nämlich der Anker 16 im Bereich der Enden des Bewegungsintervalls 26 kraftschlüssig festgehalten und so gegen ein unbeabsichtigtes Bewegen - beispielsweise durch eine Erschütterung - entlang der Translationsachse 25 gehindert.

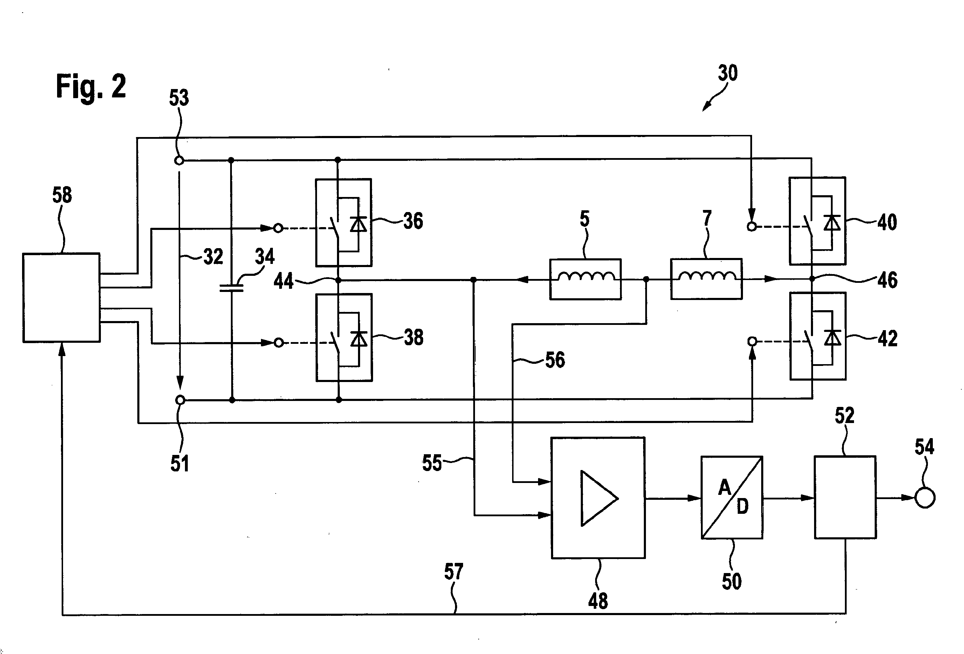

Figur 2 zeigt ein Ausführungsbeispiel für eine Schaltungsanordnung 30 für ein Lenkschloss, beispielsweise das in Figur 1 dargestellte Lenkschloss. Die Schaltungsanordnung 30 weist eine Leistungsendstufe auf, wobei die Leistungsendstufe vier Halbleiterschalter, nämlich die Halbleiterschalter 36, 38, 40 und 42 umfasst. Die Halbleiterschalter 36, 38, 40 und 42 sind jeweils durch MOS-Feldeffekt-Transistioren (MOS = Metal-Oxide-Semiconductor) gebildet. Die Halbleiterschalter 36, 38, 40 und 42 sind Bestandteil einer H-Brücke.

Die Schaltstrecken der Halbleiterschalter 36 und 38 sind jeweils über einen Verbindungsknoten 44 miteinander verbunden, sodass die Schaltstrecken 36 und 38 über den Verbindungsknoten 44 miteinander in Serie geschaltet sind. Die Schaltstrecken der Halbleiterschalter 40 und 42 sind jeweils über einen Verbindungsknoten 46 derart miteinander verbunden, dass die Schaltstrecken der Halbleiterschalter 40 und 42 jeweils miteinander in Serie verbunden sind.

Zwischen den Verbindungsknoten 44 und 46 sind die in Figur 1 bereits dargestellten Spulen 5 und 7 seriell miteinander verbunden als Ausgangslast geschaltet.

Dazu ist ein erster Anschluss der Spule 5 mit dem Verbindungsknoten 44 verbunden, wobei ein zweiter Anschluss der Spule 5 mit einem ersten Anschluss der Spule 7 verbunden ist. Ein zweiter Anschluss der Spule 7 ist mit dem Verbindungsknoten 46 verbunden.

Die Spulen 5 und 7 weisen jeweils neben einer Induktivität einen ohmschen Restwiderstand auf, welcher in diesem Ausführungsbeispiel nicht dargestellt und in der Praxis vernachlässigbar klein ist.

Die Schaltungsanordnung 30 weist auch einen Verstärker 48 auf, welcher eingangseitig über eine Verbindungsleitung 55 mit dem Verbindungsknoten 44 und so mit dem ersten Anschluss der Spule 5 und über eine Verbindungsleitung 56 mit dem zweiten Anschluss der Spule 5, und so auch mit dem ersten Anschluss der Spule 7 verbunden ist. Die Verbindungsleitungen 55 und 56 greifen so eine über der Spule 5 abfallende Spannung ab.

Der Verstärker 48 ist ausgebildet, die eingangseitig empfangene, über der Spule 5 abfallende Spannung zu verstärken und ausgangsseitig an einen Analog-Digital-Wandler 50 zu senden. Anstelle des Verstärkers 48 kann die Schaltungsanordnung 30 ein Widerstandsnetzwerk, beispielsweise einen Spannungsteiler aufweisen.

Der Analog-Digital-Wandler 50 ist dazu eingangsseitig mit dem Ausgang des Verstärkers 48 verbunden. Die Schaltungsanordnung 30 weist auch eine Verarbeitungseinheit 52, in diesem Ausführungsbeispiel einen Mikroprozessor 52 auf. Der Mikroprozessor 52 ist eingangsseitig mit dem Ausgang des Analog-DigitalWandlers 50 verbunden. Der Mikroprozessor 52 weist einen Ausgang 54 auf. Der Mikroprozessor 52 ist ausgebildet, in Abhängigkeit von der über der Spule 5 abfallenden Spannung, insbesondere in Abhängigkeit einer Spannungsänderung der über der Spule 5 abfallenden Spannung, ein Ausgangssignal als Warnsignal zu erzeugen und dieses am Ausgang 54 bereitzustellen. Der Ausgang 54 kann beispielsweise mit einem Datenbus, insbesondere einem Feldbus, beispielsweise mit einem CAN-Bus verbunden sein. Der Mikroprozessor 52 ist ausgangsseitig über eine Verbindungsleitung 57 mit einer Steuereinheit 58 verbunden. Die Steuereinheit 58 ist ausgangsseitig mit der Leistungsendstufe verbunden, insbesondere mit Steueranschlüssen der Halbleiterschalter 36, 38, 40 und 42. Während eines Betriebs der Schaltungsanordnung 30 liegt zwischen den Anschlüssen 51 und 53 eine Betriebsspannung zum Betreiben des Lenkschlosses an, beispielsweise eine Bordnetzspannung 32. Die Betriebsspannung wird durch einen Kondensator 34 gestützt, der mit den Anschlüssen 51 und 53 verbunden ist. Wenn die Halbleiterschalter 36 und 42 - beispielsweise mittels von der Steuereinheit erzeugter Steuersignale - geschlossen werden, so fließt ein Strom vom Anschluss 53 über den Halbleiterschalter 36, weiter über die Spule 5, die Spule 7 über den Verbindungsknoten 46 und den Halbleiterschalter 42, zurück zum Anschluss 51. Wenn die Halbleiterschalter 38 und 40 geschlossen werden, so fliest ein dazu umgekehrter Strom durch die Spulen 5 und 7. Die Spulen 5 und 7 erzeugen dabei jeweils zueinander entgegengesetzte Magnetfelder, so dass der in Figur 1 dargestellte Anker 16 - je nach Stromrichtung - hin- oder herbewegt wird.

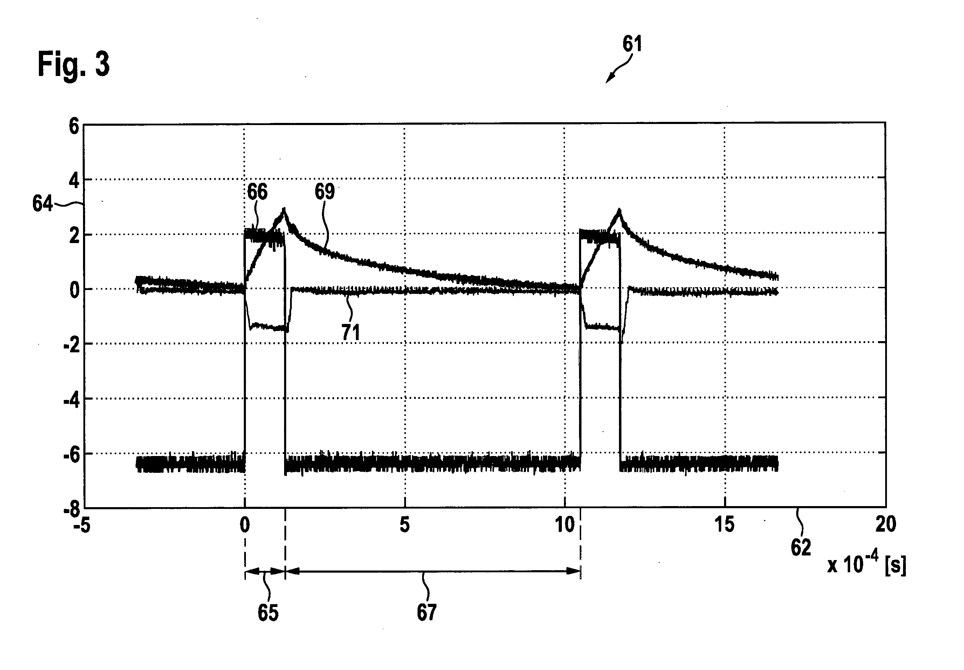

Die Verarbeitungseinheit 52 ist ausgebildet, ausgangsseitig über die Verbindungsleitung 57 ein Steuersignal zum Erzeugen des Testsignals zu erzeugen. Die Steuereinheit 58, welche eingangsseitig über die Verbindungsleitung 57 mit der Verarbeitungseinheit 52 verbunden ist, ist ausgebildet, in Abhängigkeit des eingangsseitig empfangenen Steuersignals ausgangsseitig die Halbleiterschalter 36, 38, 40 und 42 mittels des Testsignals anzusteuern und das Testsignal so zu erzeugen. Der Testsignalgenerator 58 ist dazu ausgangsseitig mit Steueranschlüssen der Halbleiterschalter 36, 38, 40 und 42 verbunden. Das Testsignal, insbesondere eine Pulsdauer des Testsignals ist derart ausgebildet, dass der Anker und das Sperrelement nicht bewegt werden können. Die Testpulse des Testsignal können - anders als in Figur 3 dargestellt - zeitlich aufeinanderfolgend alternierend zueinander entgegengesetzte Vorzeichen aufweisen.

Figur 3 zeigt ein Ausführungsbeispiel für Signale, welche beim Betrieb der in Figur 2 gezeigten Schaltungsanordnung 30 erzeugt werden können, in einem Diagramm 60. Das Diagramm 60 weist eine Abszisse 62 auf, welche eine Zeitachse repräsentiert und eine Ordinate 64 auf, welche eine Amplitudenachse repräsentiert. Abszisse 62 zeigt Zeitwerte in zehntel Millisekunden (10⁻⁴ Sekunden).

Das Diagramm 60 zeigt eine Kurve 66, wobei die Kurve 66 ein Steuersignal zum Ansteuern einer Leistungsendstufe eines elektromagnetischen Lenkschlosses repräsentiert. Die Kurve 66 repräsentiert beispielsweise das Steuersignal, welches von der Steuereinheit 58 in Figur 2 erzeugt worden ist. Die Kurve 66 weist Steuerpulse mit einer Steuerpulsdauer 65 und Pulspausen mit einer Pulspausendauer 67 auf.

Das Diagramm 60 zeigt auch einen Stromverlauf 68, welcher beispielsweise den Strom repräsentiert, der durch die Spulen 5 und 7 der in Figur 2 gezeigten Schaltungsanordnung 30 fließt. Während der Steuerpulsdauer 65 steigt der Strom, repräsentiert durch den Stromverlauf 68, kontinuierlich an.

Das Diagramm 60 zeigt auch einen Spannungsverlauf 70, welcher einen über einer Spule abfallenden Spannungsverlauf repräsentiert, die von dem Strom durchflossen wird, der durch den Stromverlauf 68 repräsentiert ist. Während der Steuerpulsdauer 65 fällt über der Spule, beispielsweise der Spule 5 in der Schaltungsanordnung 30 in Figur 2, eine Spannung ab, welche von dem Verstärker 48 verstärkt, weiter von dem Analog-Digital-Wandler 50 gewandelt und weiter von der Verarbeitungseinheit 52 erfasst werden kann.

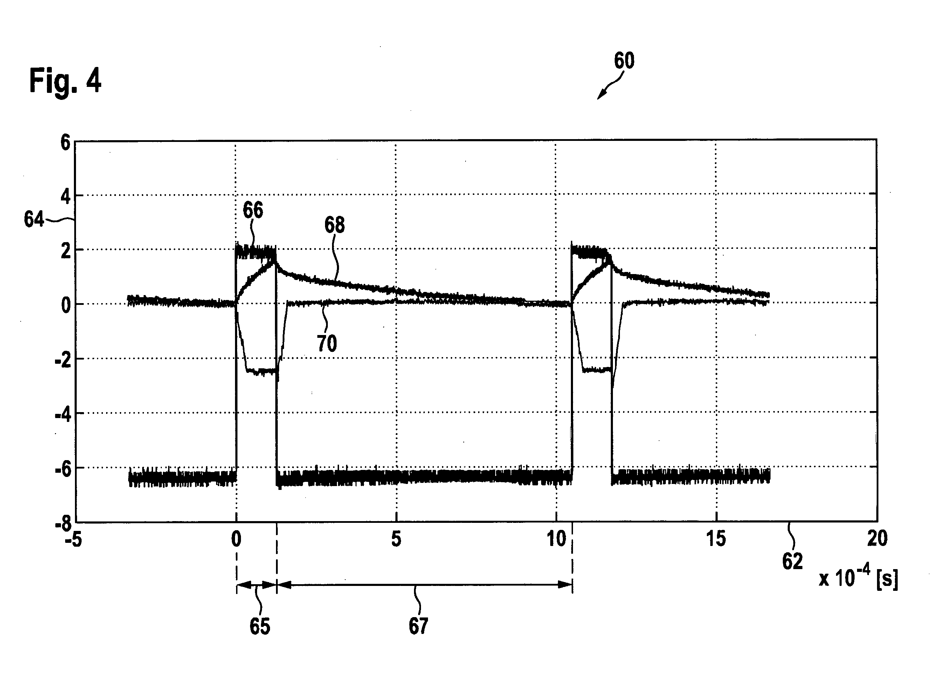

Figur 4 zeigt ein Diagramm 61, in welchem die Kurve 66 wie in dem Diagramm 60 eingetragen ist. Das Diagramm 61 zeigt auch einen Stromverlauf 69 und einen Spannungsverlauf 71. Der Stromverlauf 69 und der Spannungsverlauf 71 sind jeweils erzeugt worden, als sich der Anker 16 in Figur 1 zum überwiegenden Teil innerhalb des von der Spule 7 umschlossenen Lumens befand. Der Stromverlauf 68 und der Spannungsverlauf 70 sind jeweils erzeugt worden, als sich der in Figur 1 dargestellte Anker 16 innerhalb des von der Spule 5 umschlossnen Lumens befand.

Die in Figur 2 dargestellte Verarbeitungseinheit 52 ist ausgebildet, in Abhängigkeit der Spannungsverläufe 71 und 70, insbesondere in Abhängigkeit eines Unterschiedes zwischen den Spannungsverläufen 71 und 70, die Position des in Figur 1 dargestellten Sperrelements 12 zu erfassen. Auf diese Weise kann mittels der Verarbeitungseinheit 52 erfasst werden, ob das Sperrelement 12 in Figur 1 sich aufgrund einer Erschütterung in Richtung Motorwelle 22 bewegt hat. Die Verarbeitungseinheit 52 kann dann ein Warnsignal erzeugen und am Ausgang 54 in Figur 2 bereitstellen.

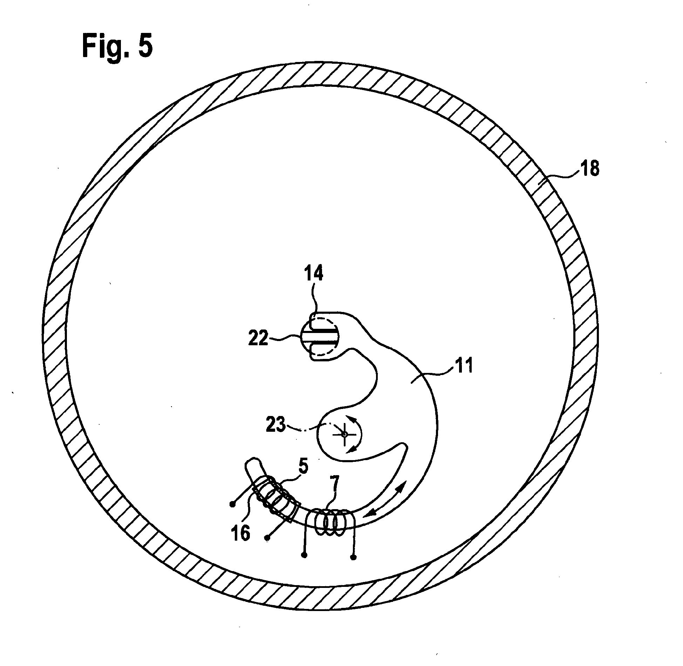

Figur 5 zeigt - schematisch in einer Schnittdarstellung - ein Ausführungsbeispiel für einen Antrieb einer Lenkvorrichtung mit einem Sperrelement 11, welches um eine Schwenkachse 23 hin- und herbeweglich angeordnet ist. Das Sperrelement 11 weist einen kreisbogenförmigen Abschnitt auf, welcher von zwei Spulen 5 und 7 umschlossen ist. Das Sperrelement 11 weist im Bereich eines Endes des kreisbogenförmigen Abschnitts einen Anker 16 auf, welcher innerhalb eines von den Spulen 5 und 7 umschlossenen, gemäß einem Ringabschnitt geformten Lumens hin- und herbeweglich mit dem Sperrelement 11 verbunden ist. Das Sperrelement 11 weist eine Sperrgabel 14 auf, welche um die Schwenkachse 23 schwenkend in entsprechenden Aussparungen einer Motorwelle 22 eingreifen kann und die Motorwelle 22 so formschlüssig gegen ein Drehbewegen sichern kann.

## Patentansprüche

1. Lenkvorrichtung für ein Kraftfahrzeug, mit einem insbesondere elektromotorischen Antrieb (10), welcher ausgebildet ist, ein Drehmoment zum Unterstützen eines Lenkens des Kraftfahrzeugs zu erzeugen, wobei die Lenkvorrichtung ein elektromagnetisches Lenkschloss (5, 7, 11, 16) mit einem entlang einer Translationsachse (25) oder um eine Schwenkachse (23) hin- und herbeweglichen Sperrelement (11) aufweist, wobei das Sperrelement (11) angeordnet und ausgebildet ist, zum Sperren des Lenkens in den Antrieb (22) formschlüssig und/oder kraftschlüssig einzugreifen, wobei das Lenkschloss (5, 7, 11,16) wenigstens zwei mit dem Sperrelement wirkverbundene elektromagnetische Spulen (5, 7) aufweist, welche jeweils angeordnet und ausgebildet sind, im bestromten Zustand das Sperrelement (11) hin- oder herzubewegen, wobei die Lenkvorrichtung eine Positionserfassungsvorrichtung (48, 50, 52, 58) aufweist, welche ausgebildet ist, wenigstens eine Position des Sperrelements innerhalb des Bewegungsintervalls (26) zu erfassen, wobei das Bewegungsintervall (26) einen gesperrten und einen freigegebenen Zustand der Lenkvorrichtung umfasst, wobei das Sperrelement (11) einen ferromagnetisch ausgebildeten Anker (16) aufweist, wobei der Anker (16) im Wirkungsbereich der Spulen (5, 7) hin- und herbeweglich angeordnet und mit dem Sperrelement (11) verbunden ist, und die Positionserfassungsvorrichtung (48, 50, 52, 58) mit wenigstens einer der Spulen (5, 7) verbunden und ausgebildet ist, eine Induktivität der Spule (5, 7) zu erfassen und in Abhängigkeit der Induktivität der Spule (5, 7) eine Position des Ankers (16) zu erfassen, **dadurch gekennzeichnet, dass**, die Positionserfassungsvorrichtung (48, 50, 52, 58) ausgebildet ist, wenigstens eine der Spulen (5, 7) mit einem Testsignal (66, 68, 69) zu beaufschlagen und in Abhängigkeit eines Antwortsignals (70, 71) der Spule (5, 7) die Induktivität der Spule (5, 7) zu erfassen, wobei das Testsignal (68, 69) Spannungspulse (65) und Pulspausen (67) umfasst und das Antwortsignal (70, 71) eine induzierte Spannung (70, 71) ist, und
dass
eine Pulsdauer des Testsignals (68, 69) derart ausgebildet ist, dass der Anker (16) und das Sperrelement (11) nicht bewegt werden können.

2. Lenkvorrichtung nach Anspruch 1,
**dadurch gekennzeichnet, dass**
die Testpulse des Testsignals zeitlich aufeinanderfolgend alternierend zueinander entgegengesetzte Vorzeichen aufweisen.

3. Lenkvorrichtung nach Anspruch 1 oder 2,
**dadurch gekennzeichnet, dass**
das Testsignal ein Rechtecksignal ist.

4. Lenkvorrichtung nach einem der vorhergehenden Ansprüche,
**dadurch gekennzeichnet, dass**
die Lenkvorrichtung eine Leistungsendstufe aufweist, wobei die Spulen (5, 7) mit einer Leistungsendstufe (36, 38, 40, 42) umfassend eine H-Brücke (36, 38, 40, 42) verbunden sind, wobei die Leistungsendstufe ausgebildet ist, die Spulen (5, 7) zum Bewegen des Sperrelements (11) mit zwei zueinander verschiedenen Stromrichtungen zu bestromen.

5. Lenkvorrichtung nach einem der vorhergehenden Ansprüche,
**dadurch gekennzeichnet, dass**
die Lenkvorrichtung einen Ausgang (54) für ein Warnsignal aufweist und ausgebildet ist, in Abhängigkeit einer erfassten Positionsänderung des Sperrelements (11) ein Warnsignal zu erzeugen und dieses ausgangsseitig (54) auszugeben.

6. Lenkvorrichtung nach einem der vorhergehenden Ansprüche,
**dadurch gekennzeichnet, dass**
die Lenkvorrichtung ausgebildet ist, in Abhängigkeit einer erfassten Positionsänderung des Sperrelements (11) die Leistungsendstufe zum Stellen einer vorbestimmten Position des Sperrelements (11) anzusteuern.

7. Lenkvorrichtung nach einem der vorhergehenden Ansprüche,
**dadurch gekennzeichnet, dass**
die Lenkvorrichtung einen Beschleunigungssensor aufweist, wobei der Beschleunigungssensor ausgebildet ist, eine Erschütterung der Lenkvorrichtung zu erfassen und ein die Erschütterung repräsentierendes Beschleunigungssignal zu erzeugen und die Lenkvorrichtung ausgebildet ist, die Positionserfassung des Sperrelements in Abhängigkeit des Beschleunigungssignals durchzuführen.

8. Verfahren zum Betreiben einer elektromagnetisch betriebenen Lenksperre (10, 30) einer elektromotorisch unterstützten Fahrzeuglenkung, bei dem zum Sperren und Freigeben der Lenkung ein Sperrelement (11) mittels wenigstens zwei elektromagnetischen Spulen hin- oder herbewegt wird, und beim Sperren eine Welle (22) eines Antriebs der Lenkunterstützung mittels des Sperrelements (11) formschlüssig gegen ein Drehbewegen gesperrt wird, und eine Position des Sperrelements (11) in Abhängigkeit einer Induktivität wenigstens einer Spule (5, 7) erfasst wird,
**dadurch gekennzeichnet, dass**
wenigstens eine der Spulen (5, 7) oder beide Spulen (5, 7) mit einem Testsignal (66, 68, 69) zu beaufschlagt werden und in Abhängigkeit eines Antwortsignals (70, 71) der Spule (5, 7) die Induktivität der Spule (5, 7) erfasst wird, wobei das Testsignal (68, 69) Spannungspulse (65) und Pulspausen (67) umfasst und das Antwortsignal (70, 71) eine induzierte Spannung (70, 71) ist, und wobei eine Pulsdauer des Testsignals (66, 68, 69) derart ausgebildet ist, dass der Anker (16) und das Sperrelement (11) nicht bewegt werden können.

## Claims

1. Steering device for a motor vehicle, having an, in particular electric motor, drive (10) which is designed to generate a torque for assisting the steering of the motor vehicle, wherein the steering device has an electromagnetic steering lock (5, 7, 11, 16) with a locking element (11) which can move to and fro along a translation axis (25) or about a pivoting axis (23), wherein the locking element (11) is arranged and designed to engage in a positively locking and/or frictionally locking fashion in the drive (22) in order to lock the steering, wherein the steering lock (5, 7, 11, 16) has at least two electromagnetic coils (5, 7) which are operatively connected to the locking element and which are each arranged and designed to move the locking element (11) to and fro in the energized state, wherein the steering device has a position-sensing device (48, 50, 52, 58) which is designed to sense at least one position of the locking element within the movement interval (26), wherein the movement interval (26) comprises a locked and a released state of the steering device, wherein the locking element (11) has a ferromagnetically embodied armature (16), wherein the armature (16) is arranged so as to move to and fro in the field of action of the coils (5, 7) and is connected to the locking element (11), and the position-sensing device (48, 50, 52, 58) is connected to at least one of the coils (5, 7) and is designed to sense an inductance of the coil (5, 7) and to sense a position of the armature (16) as a function of the inductance of the coil (5, 7), **characterized in that** the position-sensing device (48, 50, 52, 58) is designed to apply a test signal (66, 68, 69) to at least one of the coils (5, 7), and to sense the inductance of the coil (5, 7) as a function of a response signal (70, 71) of the coil (5, 7), wherein the test signal (68, 69) comprises voltage pulses (65) and inter-pulse periods (67), and the response signal (70, 71) is an induced voltage (70, 71), and
**in that**
an inter-pulse period of the test signal (68, 69) is designed in such a way that the armature (16) and the locking element (11) cannot be moved.

2. Steering device according to Claim 1,
**characterized in that**
the test pulses of the test signal have signs which are alternately opposed to one another in a chronologically successive fashion.

3. Steering device according to Claim 1 or 2,
**characterized in that**
the test signal is a square-wave signal.

4. Steering device according to one of the preceding claims,
**characterized in that**
the steering device has a power output stage, wherein the coils (5, 7) are connected to a power output stage (36, 38, 40, 42) comprising an H bridge (36, 38, 40, 42), wherein the power output stage is designed to energize the coils (5, 7) with two different directions of current in order to move the locking element (11).

5. Steering device according to one of the preceding claims,
**characterized in that**
the steering device has an output (54) for a warning signal and is designed to generate a warning signal as a function of a sensed change in position of the locking element (11) and to output said warning signal on the output side (54).

6. Steering device according to one of the preceding claims,
**characterized in that**
the steering device is designed to actuate the power output stage as a function of a sensed change in position of the locking element (11), in order to set a predetermined position of the locking element (11).

7. Steering device according to one of the preceding claims,
**characterized in that**
the steering device has an acceleration sensor, wherein the acceleration sensor is designed to sense when the steering device experiences a shock and to generate an acceleration signal which represents the shock, and the steering device is designed to carry out the sensing of the position of the locking element as a function of the acceleration signal.

8. Method for operating an electromagnetically operated steering lock (10, 30) of an electric-motor-assisted vehicle steering system in which, in order to lock and release the steering, a locking element (11) is moved to and fro by means of at least two electromagnetic coils, and when locking occurs a shaft (22) of a drive of the steering assistance system is locked in a positively locking fashion against rotational movement by means of the locking element (11), and a position of the locking element (11) is sensed as a function of an inductance of at least one coil (5, 7),
**characterized in that**
a test signal (66, 68, 69) is applied to at least one of the coils (5, 7) or to both coils (5, 7), and the inductance of the coil (5, 7) is sensed as a function of a response signal (70, 71) of the coil (5, 7), wherein the test signal (68, 69) comprises voltage pulses (65) and inter-pulse periods (67), and the response signal (70, 71) is an induced voltage (70, 71), and wherein an inter-pulse period of the test signal (66, 68, 69) is designed in such a way that the armature (16) and the locking element (11) cannot be moved.

## Revendications

1. Système de direction pour un véhicule automobile, doté d'un entraînement (10) notamment électromotorisé réalisé pour soutenir un couple de rotation servant à assister la direction du véhicule automobile, le système de direction comportant un verrou de direction (5, 7, 11, 16) électromagnétique avec un élément de blocage (11) mobile selon un mouvement de va-et-vient le long d'un axe de translation (25) ou autour d'un axe de pivotement (23), l'élément de blocage (11) étant disposé et réalisé pour s'engrener par complémentarité de formes et/ou par complémentarité de forces en vue de bloquer la direction dans un entraînement (22), le verrou de direction (5, 7, 11, 16) comportant au moins deux bobines (5, 7) électromagnétiques activement reliées à l'élément de blocage respectivement disposées et réalisées pour déplacer l'élément de blocage (11) selon un mouvement de va-et-vient à l'état alimenté en courant, le système de direction comportant un dispositif d'enregistrement de position (48, 50, 52, 58) réalisé pour enregistrer au moins une position de l'élément de blocage à l'intérieur de l'intervalle de mouvement (26), l'intervalle de mouvement (26) comprenant un état bloqué et un état libre du système de direction, l'élément de blocage (11) comportant une ancre (16) réalisée de façon ferromagnétique, l'ancre (16) étant disposée de façon à pouvoir effectuer un mouvement de va-et-vient dans la zone d'action des bobines (5, 7) et étant reliée à l'élément de blocage (11) et les dispositif d'enregistrement de position (48, 50, 52, 58) étant reliés à au moins une des bobines (5, 7) et réalisés pour enregistrer une inductivité de la bobine (5, 7) et pour enregistrer une position de l'ancre (16) en fonction de l'inductivité de la bobine (5, 7), **caractérisé en ce que** : le dispositif d'enregistrement de position (48, 50, 52, 58) est réalisé pour amener un signal de test (66, 68, 69) à au moins une des bobines (5, 7) et pour enregistrer l'inductivité de la bobine (5, 7) en fonction d'un signal de réponse (70, 71) de la bobine (5, 7), le signal de test (68, 69) comprenant des impulsions de tension (65) et des pauses d'impulsion (67) et le signal de réponse (70, 71) étant une tension (70, 71) induite ; et
une durée d'impulsion du signal de test (68, 69) étant telle que l'ancre (16) et l'élément de blocage (11) ne peuvent pas être déplacés.

2. Système de direction selon la revendication 1, **caractérisé en ce que** les impulsions de test du signal de test se suivant alternativement dans le temps comportent un signe opposé.

3. Système de direction selon la revendication 1 ou 2, **caractérisé en ce que** le signal de test est un signal rectangulaire.

4. Système de direction selon l'une quelconque des revendications précédentes, **caractérisé en ce que** le système de direction comporte un étage terminal de puissance, les bobines (5, 7) étant reliées à un étage terminal de puissance (36, 38, 40, 42) comprenant un pont en H (36, 38, 40, 42), l'étage terminal de puissance étant réalisé pour alimenter les bobines (5, 7) dans deux directions de courant différentes en vue de déplacer l'élément de blocage (11).

5. Système de direction selon l'une quelconque des revendications précédentes, **caractérisé en ce que** le système de direction comporte une sortie (54) pour un signal d'avertissement et est réalisé pour émettre un signal d'avertissement en fonction d'un changement de position déterminé de l'élément de blocage (11) et pour l'envoyer du côté de sortie (54).

6. Système de direction selon l'une quelconque des revendications précédentes, **caractérisé en ce que** le système de direction est réalisé pour commander l'étage terminal de puissance en fonction d'un changement de position déterminé de l'élément de blocage (11), en vue de régler une position prédéterminée de l'élément de blocage (11).

7. Système de direction selon l'une quelconque des revendications précédentes, **caractérisé en ce que** le système de direction comporte un capteur d'accélération, le capteur d'accélération étant réalisé pour enregistrer un ébranlement du système de direction et pour émettre un signal d'accélération représentant l'ébranlement et le système de direction étant réalisé pour exécuter les enregistrements de position de l'élément de blocage en fonction du signal d'accélération.

8. Procédé d'actionnement d'un verrou de direction (10, 30) à fonctionnement électromagnétique d'une direction de véhicule à assistance électromotorisée, dans lequel un élément de blocage (11) est déplacé selon un mouvement de va-et-vient à l'aide d'au moins deux bobines électromagnétiques pour bloquer et libérer la direction et dans lequel lors du blocage, un arbre (22) d'un entraînement de la direction assistée est bloqué par complémentarité de formes à l'aide de l'élément de blocage (11) pour empêcher tout mouvement de rotation et qu'une position de l'élément de blocage (11) est déterminée en fonction d'une inductivité d'au moins une bobine (5, 7), **caractérisé en ce qu'**au moins un signal de test (66, 68, 69) est amené à une des bobines (5, 7) ou aux deux bobines (5, 7) et que l'inductivité de la bobine (5, 7) est déterminée en fonction d'un signal de réponse (70, 71) de la bobine (5, 7), le signal de test (68, 69) comprenant des impulsions de tension (65) et des pauses d'impulsion (67) et le signal de réponse (70, 71) étant une tension (70, 71) induite, une durée d'impulsion du signal de test (66, 68, 69) étant telle que l'ancre (16) et l'élément de blocage (11) ne peuvent pas être déplacés.
